# EUROPÄISCHE PATENTSCHRIFT

(11) **EP 0 463 155 B1**
(45) Veröffentlichungstag und Bekanntmachung des Hinweises auf die Patenterteilung: **15.12.1993**
(21) Anmeldenummer: 91903713.5
(22) Anmeldetag: 17.01.1991
(51) Int. Cl.: F16K 41/02

(54) **ABSPERRARMATUR MIT EINER ABDICHTVORRICHTUNG**
SHUT-OFF FITTING WITH SEALING DEVICE
ROBINETTERIE D'ARRET AVEC UN DISPOSITIF D'ETANCHEITE

(30) Priorität: 18.01.1990 DE 4001233
(43) Veröffentlichungstag der Anmeldung: 02.01.1992
(73) Patentinhaber: EISENWERK HEINRICH SCHILLING GmbH & Co., D-33689 Bielefeld (DE)
(72) Erfinder: STEWEN, Wilhelm, D-4200 Oberhausen 1 (DE); HÖLKEN, Norbert, D-4354 Datteln (DE); STEFANIAK, Klaus, D-4716 Olfen (DE)
(74) Vertreter: Thielking, Bodo, Dipl.-Ing.
(86) Internationale Anmeldenummer: EP9100074
(87) Internationale Veröffentlichungsnummer: WO9110855

(56) Entgegenhaltungen:
- EP-A- 0 308 390
- GB-A- 702 736
- GB-A- 726 795
- GB-A- 817 426
- US-A- 3 523 551

## Beschreibung

### TECHNISCHES GEBIET

Die Erfindung betrifft eine Absperrarmatur mit einer Abdichtvorrichtung nach dem Oberbegriff des Anspruchs 1.

### STAND DER TECHNIK

Es ist allgemeiner Stand der Technik, Stopfbuchspackungen als Dichtungen für die Spindeln bzw. Wellen von Absperrarmaturen einzusetzen. Diese Dichtungen unterliegen beim Drehen der Spindel bzw. Welle einem hohem Verschleiß, der im wesentlichen durch die dynamische Beanspruchung der Dichtelemente verursacht wird. Es sind auch Schieberarmaturen mit Spindelrückdichtungen (Konus, Labyrinth) bekannt, die lediglich bei vollständig geöffnetem Schieber wirksam werden und dann eine zusätzliche statische Abdichtung darstellen. Diese Form der Abdichtung dient im wesentlichen dem Zweck, verschlissene Stopfbuchspackungen austauschen zu können. Lösungen mit bisher bekannten Stopfbuchspackungen erreichen nicht die Dichtungswirkungen, wie sie nach den heute in Deutschland geltenden gesetzlichen Bestimmungen gefordert werden.

Es ist weiterhin bereits bekannt, Spindel- und Wellenabdichtungen mit einem Faltenbalg auszurüsten. Diese Möglichkeit ist bisher nur bei kleineren Nennweiten (unter DN 200) angewendet worden. Die Faltenbalg-Ausführung erfordert eine Bauhöhe, die dem Drei- bis Vierfachen des Rohrleitungsdurchmessers entspricht und daher in vielen Fällen bereits wegen Platzmangels nicht einsetzbar ist. Ein weiterer Nachteil der Faltenbalg-Lösung besteht darin, daß bei defektem Faltenbalg ein Austauschen der kompletten Absperrarmatur erforderlich wird.

Auch eine aus der US-PS 2,780,233 bekannte Absperrarmatur mit Dichtungspackung weist den Nachteil auf, daß sie eine vergleichsweise große Bauhöhe besitzt. Die Verwendung nur einer als Hauptdichtelement dienenden Dichtungspackung in den verschiedenen Betriebsstellungen kann auch bei dieser bekannten Lösung nicht die in Deutschland geltenden gesetzlichen Vorschriften erfüllen. Die Erfüllung der maßgeblichen Anforderung an die Dichtheit ist insbesondere auch nicht bei den erforderlichen Auswechslungen der Dichtungspackungen gewährleistet,da ein Rückdichtelement vollständig fehlt. Schließlich ist der konstruktive Aufbau der aus der US-PS 2,780,233 bekannten Lösung vergleichsweise kompliziert, so daß bei einem Dichtungspackungswechsel eine Mehrzahl von Gehäuseteilen aus- und eingebaut werden muß.

### DIE ERFINDUNG

Ausgehend von dem vorstehend genannten Stand der Technik liegt der Erfindung die Aufgabe zugrunde, eine Absperrarmatur bzw. eine Abdichtvorrichtung für eine Absperrarmatur zu schaffen, welche die Nachteile der bekannten Lösungen vermeidet und sich durch Erfüllung sehr hoher Anforderungen an die Dichtigkeit auszeichnet. Es sollen mit einer derartigen Armatur insbesondere die kritischen Bestimmungen der deutschen gesetzlichen Vorschrift erfüllt werden, die unter der Kurzbezeichnung "TA Luft" bekannt ist und vom 27.02.1986 datiert. Es soll eine besonders dichte Absperrarmatur, die kleine Bauhöhen ermöglicht, geschaffen werden und diese Armatur soll auch bei Rohrleiten mit größeren Nennweiten, also über DN 200, verwendbar und kostengünstig sein.

Die Lösung dieser Aufgabe erfolgt mit den Merkmalen des Kennzeichnungsteils von Anspruch 1. In den Unteransprüchen sind zweckmäßige Weiterbildungen der Absperrarmatur beschrieben.

Bei der erfindungsgemäßen Absperrarmatur wird eine Ausgestaltung des Abdichtungsbereichs vorgesehen, der aufgrund eines größeren Innendurchmessers beim Drehen der Spindel bzw. Welle keinem Verschleiß ausgesetzt ist. Die Abdichtungselemente werden dabei erst kurz vor Beendigung des Schließvorgangs der Armatur auf Druck beansprucht.

Damit wird eine Optimierung der Gestaltung des Stopfbuchsbereichs erzielt, die einschlägigen gesetzlichen Bestimmungen sicher zu erfüllen, d.h. die Dichtung der Armatur gegenüber der äußeren Umwelt wird hierdurch zuverlässig gewährleistet.

Die Mehrzahl der Großarmaturen befinden sich im Betrieb jeweils längere Zeit entweder in geöffnetem oder geschlossenem Zustand, da es sich hierbei nicht um Regelarmaturen, die ihre Betriebszustände oft wechseln, handelt. Die Zeiträume zwischen den Bedienungsvorgängen der Großarmaturen sind folglich sehr lang, beispielsweise bis zu zwei Jahren. Einem solchen, zu weit über 99 % statischen Betrieb wird die Erfindung gerecht, indem im Abdichtungsbereich eine zusätzliche statische Abdichtung sowohl bei geschlossenem als auch bei in einer Zwischenstellung befindlichem Schieber vorgesehen ist. Diese zusätzliche Abdichtung wird bei Armaturbetätigungen nicht dynamisch beansprucht und unterliegt deshalb praktisch keinerlei Verschleiß.

### KURZBESCHREIBUNG DER ZEICHNUNGSABBILDUNG

In der Zeichnung zeigen:
- Figur 1 -: eine Schieberarmatur in geschlossener Stellung,
- Figur 2 -: die Schieberarmatur nach Figur 1 in einer Zwischenstellung,
- Figur 3 -: die Schieberarmatur gemäß Figur 1 in geöffneter Stellung,
- Figur 4 -: eine alternative Ausführungsform analog Figur 2.

### BESTER WEG ZUR AUSFÜHRUNG DER ERFINDUNG

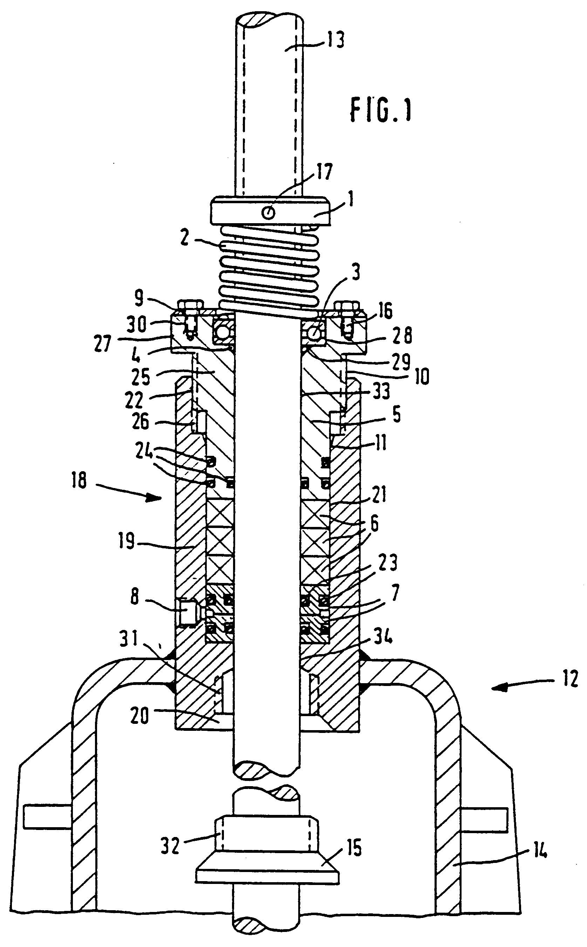

In den Figuren 1 bis 3 ist eine Absperrarmatur dargestellt, die als Schieberarmatur 12 ausgebildet ist. Die Schieberarmatur weist ein Armaturengehäuse 14 auf, in dem ein hier nicht dargestellter Schieberkeil untergebracht ist, der über eine Spindel 13 betätigbar ist. Die Spindel 13 ist in einem zylindrischen Packungsgehäuse 19 einer Abdichtvorrichtung 18 geführt, die fest mit dem Armaturengehäuse 14 verbunden ist.

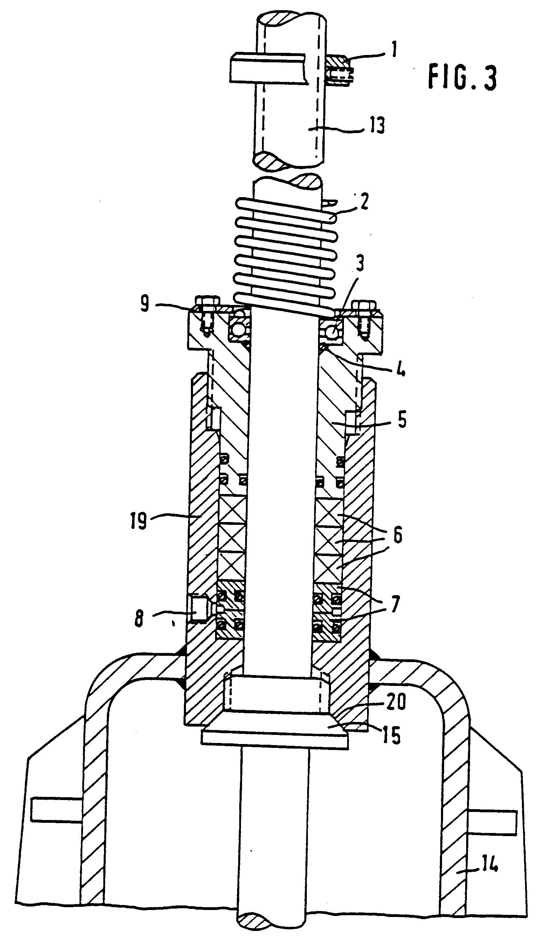

Das zylindrische Packungsgehäuse 19 ist an seinem im Armaturengehäuse 14 befindlichen Ende mit einem Dichtsitz 20 versehen zur Aufnahme einer Spindel-Rückdichtung 15, die bei geöffneter Schieberstellung (Figur 3) wirksam wird und an der ein Gewindeteil 32 befestigt ist, der in eine Gewindebohrung 31 einschraubbar ist. Das zylindrische Packungsgehäuse 19 enthält eine Führungsbohrung 34 für die Spindel 13, eine Aufbohrung 21 sowie eine Gewindebohrung 22 mit Innengewinde 26. Die Aufbohrung 21 dient zur Führung von - im Beispiel zwei - genuteten Metallringen 7, die sich über O-Ringe 23 dichtend gegen die Aufbohrung 21 bzw. die Spindel 13 abstützen. Weiterhin sind in der Aufbohrung 21 - siehe Figur 3 - Graphit-Packungsringe 6 untergebracht, die den genuteten Metallringen 7 aufsitzen und gegen die eine Stopfbuchse 5 anpreßbar ist, deren Bohrung 33 sich über O-Ringe 24 gegen die Spindel 13 und deren Dichtsitz 11 sich über O-Ringe 24 gegen die Aufbohrung 21 abstützen.

Die Stopfbuchse 5 weist einen ersten Erweiterungsteil 25 auf, der mit einem Außengewinde 10 versehen ist, das über das Innengewinde 26 in das zylindrische Packungsgehäuse 10 einschraubbar ist und zum Aufbringen der erforderlichen Packungspressung auf die Graphit-Packungsringe 6 dient. Ein zweiter Erweiterungsteil 27 der Stopfbuchse 5 weist eine Erweiterungsbohrung 28 auf,in der ein Achsiallager 3 untergebracht ist. Der Erweiterungsteil 25 hat eine Abschrägung 29, in der ein O-Ring 4 untergebracht ist, der sich gegen das Achsiallager 3 abstützt.

Das Achsiallager 3 wird durch einen Rückhaltering 9 fixiert, der über Befestigungselemente 16, im Beispiel durch Schrauben, gehalten wird, die in Gewindebohrungen 30 des zweiten Erweiterungsteiles 27 eingreifen.

Zur Aufnahme einer hier nicht dargestellten Packungsauspreß-Vorrichtung ist im Bereich der genuteten Metallringe 7 ein Gewindeloch 8 im zylindrischen Packungsgehäuse 19 vorgesehen.

Auf die Spindel 13 ist eine Feder 2 aufgesteckt, die durch einen höhenverstellbaren Feststellring 1 gehalten wird. Letzterer ist über ein Befestigungselement 17 fixierbar.

Die Wirkungsweise der Abdichtvorrichtung 18 ist folgende:

Schieber geschlossen:

Der Feststellring 1 ist gemäß Figur 1 so fixiert, daß er beim Schließen des Schiebers über die Feder 2 und das Achsiallager 3 einen genau definierten Druck auf den bis zu diesem Zeitpunkt unbelasteten O-Ring 4 ausübt. Das Achsiallager 3 kompensiert dabei die aufretenden Radialkräfte und dient somit als Verschleißschutz. Im Zusammenhang mit dieser statischen Dichtung ist die Gestaltung der dynamisch belasteten Dichtungselemente optimiert worden. Die genuteten Metallringe 7 mit eingesetzten O-Ringen 23 stellen beim Wechseln der Packungsringe 6 neben der bereits für sich bekannten Spindel-Rückdichtung 15 ein zusätzliches Abdichtungselement dar. Außerdem dienen die Metallringe 7 als Auspreßhilfe für die Graphit-Packungsringe 6. Der für die Graphit-Packungsringe 6 erforderliche Anpreßdruck wird über die Stopfbuchse 5 durch Eindrehen des Außengewindes 10 in das Innengewinde 26 aufgebracht.

Das Gewindeloch 8 ist für den Anschluß einer nicht dargestellten Packungsauspreß-Vorrichtung vorgesehen. Bei Anwendung dieser Vorrichtung werden Spindel- und Dichtungsflächen-Beschädigungen vermieden, die ansonsten beim Entfernen der Packungsringe 6 mittels Packungszieher (-Nadel) häufig auftreten. Der Rückhaltering 9 dient der Fixierung des nur statisch belasteten O-Ringes 4 bei Spindelbetätigung.

Mit Hilfe des oberhalb der Spindel-Rückdichtung 15 angeordneten Gewindeteils 32, das in die Gewindebohrung 31 eingedreht wird, kann die Spindel 13 bei geöffnetem Schieber arretiert werden,so daß die Graphit-Packungsringe 6 ungeteilt aus- und eingebaut werden können.

Schieber in Zwischenstellung:

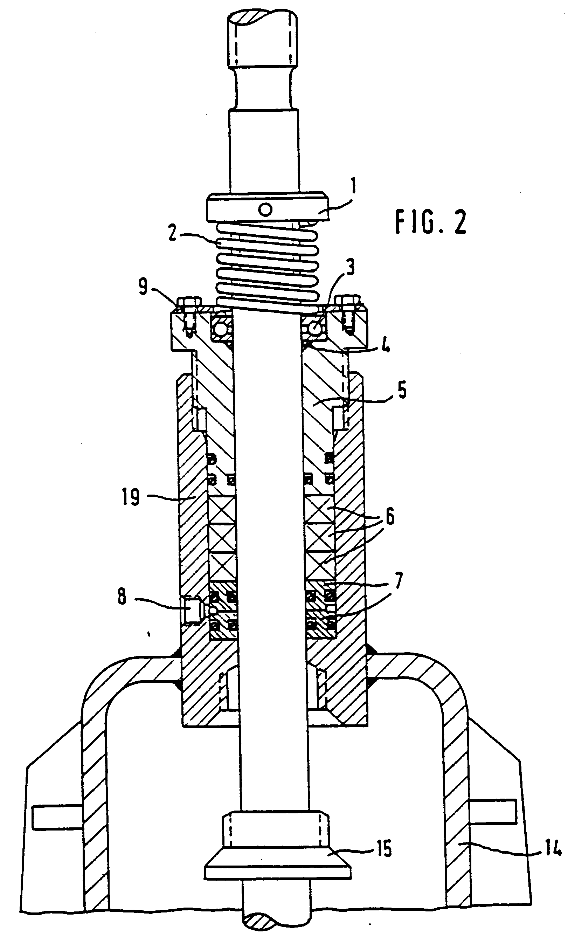

Bei dieser Stellung entsprechend Figur 2, die vergleichsweise selten notwendig ist, wird gemäß dem geänderten Öffnungsverhältnis der Feststellring 1 höher auf der Spindel 13 neu fixiert.

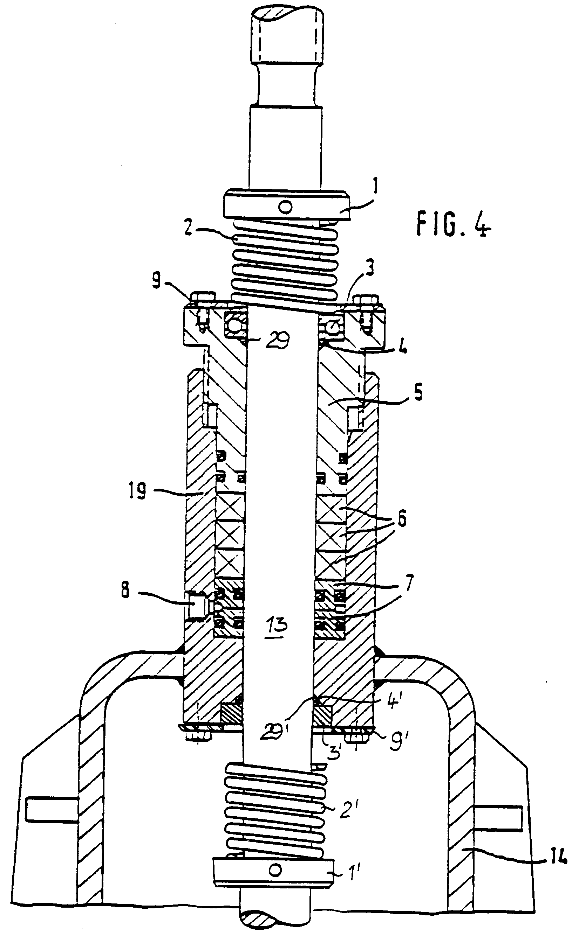

Statt der in den Zeichnungsfiguren 1 bis 3 dargestellten und vorstehend beschriebenen Rückdichtung mit Dichtsitz 20 und Spindelrückdichtung 15 kann die Rückdichtung sehr ähnlich der im oberen Bereich der Zeichnungsfiguren dargestellten Dichtung ausgeführt werden, wie dies aus Figur 4 ersichtlich ist. Bei dieser alternativen Ausführungsform besitzt das Päckungsgehäuse 19 an seinem unteren Ende statt des dort sonst vorgesehenen schräg verlaufenden Dichtsitzes 20 mit Gewindebohrung 31 eine kreiszylindrische Bohrung, in der ein Ringkörper 3' liegt, der in der Öffnungsstellung der Spindel 13 von einer zur Druckfeder 2 analogen unteren Druckfeder 2' beaufschlagt wird. Dieser für die Rückdichtung vorgesehene zusätzliche Ringkörper 3' drückt eine vorzugsweise als O-Ring ausgebildete Ringdichtung 4' in eine zum Zentrum ansteigende Schrägnut. Der Ringkörper 3' ist über einen Rückhaltering 9' gesichert. Die beschriebene Konstruktion der Rückdichtung entspricht in ihrem grundsätzlichen Aufbau der Dichtungseinrichtung, die am oberen Ende der Stopfbuchse 5 wirksam ist. In der Stellung gemäß Figur 4 ist die Rückdichtung nicht wirksam, da es sich hier um eine Zwischenstellung handelt. Diese Rückdichtung wird vielmehr erst wirksam, wenn der Absperrschieber in seine Öffnungsstellung gefahren ist.

In der dargestellten Ausführungsform erfolgt die Zustellung der Stopfbuchse über ein Verdrehen in einer Gewindebohrung. Statt dessen können die Dichtelemente der Packung auch durch eine lediglich in Achsrichtung verschiebbare, nicht verdrehbare Stopfbuchse beaufschlagt werden, welche über eine in Achsrichtung wirksame Druckfeder gegen die Packung gedrückt wird.

## Patentansprüche

1. Absperrarmatur mit einer Abdichtvorrichtung (18) aus einem Packungsgehäuse (19) und einer Stopfbuchse (5) für das Betätigungselement (13) des Absperrelements, wobei das Packungsgehäuse (19) eine Aufbohrung (21) für eine als Hauptdichtelement dienende Dichtungspackung (6) aufweist und eine Führungsbohrung (34) für das Betätigungselement (13) vorgesehen ist,
dadurch gekennzeichnet,
daß
a) die Dichtungspackung mindestens einen genuteten Metallring (7) mit elastischen Dichtungsringen (23) gegenüber dem Betätigungselement (13) und der Aufbohrung (21) aufweist,
b) die Stopfbuchse (5) eine zum Zentrum hin abfallende Abschrägung (29) als Sitz für einen elastischen Dichtungsring (4) aufweist, der von einem durch die Kraft einer Feder (2) beaufschlagten Ringkörper (3) in Längsachsenrichtung des Betätigungselements (13) beaufschlagt wird.

2. Absperrarmatur nach Anspruch 1,
dadurch gekennzeichnet,
daß sie eine Rückdichteinrichtung (15, 20; 4', 3', 2', 1') aufweist.

3. Absperrarmatur nach Anspruch 1 oder 2,
dadurch gekennzeichnet,
daß der Ringkörper (3) von einer das Betätigungselement (13) umschließenden Druckfeder (2) beaufschlagt wird, die zur Anlage einerseits am Ringkörper (3) und andererseits an einem Anschlag (1) des Betätigungselements (13) ausgebildet ist.

4. Absperrarmatur nach Anspruch 3,
dadurch gekennzeichnet,
daß der Anschlag (1) von einem am Betätigungselement (13) befestigten Ring (1) gebildet ist.

5. Absperrarmatur nach einem oder mehreren der Ansprüche 1 bis 4,
dadurch gekennzeichnet,
daß die Rückdichtung ebenfalls einen durch die Kraft einer Feder (2') beaufschlagten Ringkörper (3') aufweist, der ebenfalls eine elastische Ringdichtung (4') in eine zum Zentrum hin anfallende Schrägnut (29') drückt, welche auf der dem Absperrelement zugewandten Seite des Packungsgehäuses (19) vorgesehen ist, wobei die Ringdichtung (4') zwischen der Schrägnut (29') des Packungsgehäuses (19) und dem Umfang des Betätigungselements (13) abdichtet.

6. Absperrarmatur nach einem oder mehreren der Ansprüche 1 bis 5,
dadurch gekennzeichnet,
daß der Ringkörper (3) in einer ihn umschließenden Bohrung (28) der Stopfbuchse (5) geführt ist und darin mittels eines übergreifenden angeschraubten Rückhalteelements gehalten wird.

7. Absperrarmatur nach Anspruch 6,
dadurch gekennzeichnet,
daß das Rückhalteelement ein Rückhaltering (9) ist.

8. Absperrarmatur nach einem oder mehreren der Ansprüche 1 bis 7,
dadurch gekennzeichnet,
daß der Ringkörper (3) ein Axiallager ist.

9. Absperrarmatur nach einem oder mehreren der Ansprüche 1 bis 8,
dadurch gekennzeichnet,
daß als Dichtelemente der Dichtungspackung Graphit-Packungsringe (6) dienen.

10. Absperrarmatur nach einem oder mehreren der Ansprüche 1 bis 9,
dadurch gekennzeichnet,
daß die Dichtelemente (6; 7) über ein Gewindeloch (8) an eine Packungsauspreßvorrichtung anschließbar sind.

11. Absperrarmatur nach einem oder mehreren der Ansprüche 1 bis 10,
dadurch gekennzeichnet,
daß die Stopfbuchse (5) über ein in Längsachsrichtung wirkendes Druckfederelement gegen die Dichtelemente (6; 7) vorgespannt ist.

12. Absperrarmatur nach einem oder mehreren der Ansprüche 1 bis 11,
dadurch gekennzeichnet,
daß die Dichtungsringe (4; 23; 24) O-Ringe sind.

## Claims

1. Shut-off fitment with a sealing device (18) comprising a packing casing (19) and stuffing box gland (5) for the operating element (13) of the shut-off element, wherein the packing casing (19) has a bore (21) for a sealing packing (6) which serves as the main sealing element, and a guide bore (34) is provided for the operating element (13),
characterised in that
a) the sealing packing has at least one grooved metal ring (7) with elastic sealing rings (23) opposite the operating element (13) and the bore (21),
b) the stuffing box gland (5) has an incline (29) dropping towards the centre as a seat for an elastic sealing ring (4) which is biased in the longitudinal axial direction of the operating element (13) by the force of a spring (2).

2. Shut-off fitment according to claim 1,
characterised in that it has a return sealing device (15, 20; 4', 3', 2', 1').

3. Shut-off fitment according to claim 1 or 2
characterised in that the ring body (3) is biased by a compression spring (2) enclosing the operating element (13) and designed to adjoin the ring body (3) on one side and a stop (1) of the operating element (13) on the other.

4. Shut-off fitment according to claim 3
characterised in that the stop (1) is formed by a ring (1) fixed on the operating element (13).

5. Shut-off fitment according to one or more of claims 1 to 4 characterised in that the return seal likewise has a ring body (3') which is biased by the force of a spring (2') and likewise presses an elastic ring seal (4') into an inclined groove (29') which falls towards the centre and which is provided on the side of the packing casing (19) facing the shut-off element , wherein the ring seal (4') seals between the inclined groove (29') of the packing casing (19) and the circumference of the operating element (13).

6. Shut-off fitment according to one or more of claims 1 to 5 characterised in that the ring body (3) is guided in a surrounding bore (28) of the stuffing box gland (5) and is held on same by means of a screwed-on retaining element which engages over same.

7. Shut-off fitment according to claim 6
characterised in that the retaining element is a retaining ring (9).

8. Shut-off fitment according to one or more of claims 1 to 7 characterised in that the ring body (3) is an axial bearing.

9. Shut-off fitment according to one or more of claims 1 to 8 characterised in that graphite packing rings (6) are used as the sealing elements of the sealing packing.

10. Shut-off fitment according to one or more of claims 1 to 9 characterised in that the sealing elements (6;7) can be connected by a threaded hole (8) to a packing ejector device.

11. Shut-off fitment according to one or more of claims 1 to 10 characterised in that the stuffing box gland (5) is pretensioned against the sealing elements (6;7) by a compression spring element acting in the longitudinal axial direction.

12. Shut-off fitment according to one or more of claims 1 to 11 characterised in that the sealing rings (4; 23; 24) are O-rings.

## Revendications

1. Robinetterie d'arrêt avec dispositif d'étanchéité (18) composé d'un boitier (19) et d'un presse-étoupe (5) pour l'élément d'actionnement (13) de la pièce d'arrêt, le boitier (19) présentant une perforation (21) destinée à accueillir une garniture (6), qui sert d'élément d'étanchéité principal, et une forure de guidage (34) étant prévue pour l'élément d'actionnement (13),
caractérisée par le fait
que
a) La garniture d'étanchéité présente, au moins, un anneau métallique encoché (7) avec bagues d'étanchéité élastiques (23) par rapport à l'élément d'actionnement (13) et à la perforaration (21);
b) le presse-étoupe (5) présente une surface bisautée (29), en pente vers le centre et servant de logement pour une bague d'étanchéité élastique (4), sur laquelle un corps annulaire (3), sousmis à l'action d'un ressort (2), agit dans le sens de l'axe longitudinal de l'élément d'actionnement (13).

2. Robinetterie d'arrêt selon revendication 1,
caractérisée par le fait
qu'elle est pourvue d'un dispositif d'étanchéité arrière (15, 20; 4', 3', 2', 1').

3. Robinetterie d'arrêt selon revendication 1 ou 2,
caractérisée par le fait
que le corps annulaire (3) est soumis à l'action d'un ressort (2) entourant l'élément d'actionnement (13) et prend appui, d'une part, contre le corps annulaire (3) et, d'autre part, contre une butée (1) de l'élément d'actionnement (13).

4. Robinetterie d'arrêt selon revendication 3,
caractérisée par le fait
que la butée (1) consiste en une bague, qui est fixée à l'élément d'actionnement (13).

5. Robinetterie d'arrêt selon une ou plusieurs revendications 1 à 4,
caractérisée par le fait
que l'élément d'étanchéité arrière présente, lui aussi, un corps annulaire (3'), pressant également une bague d'étanchéité élastique (4') dans une rainure oblique (29'), en pente vers le centre et prévue sur le côté du boitier (19) dirigé vers l'élément d'arrêt, le corps annulaire (3') étant soumis à l'action d'un ressort (2') et la bague d'étanchéité (4') assurant l'étanchéité entre la rainure oblique (29') du boitier (19) et la surface circonférencielle de l'élément d'actionnement (13).

6. Robinetterie d'arrêt selon une ou plusieurs revendications 1 à 5,
caractérisée par le fait
que le corps annulaire (3) est introduit dans une perforation (28) du presse-étoupe (5), qui l'entoure, et y est maintenu à l'aide d'un élément de retenue vissé.

7. Robinetterie d'arrêt selon revendication 6,
caractérisée par le fait
que l'élément de retenue est un bague de retenue (9).

8. Robinetterie d'arrêt selon une ou plusieurs revendications 1 à 7,
caractérisée par le fait
que le corps annulaire (3) est un palier axial.

9. Robinetterie d'arrêt selon une ou plusieurs revendications 1 à 8,
caractérisée par le fait
que des bagues d'étoupage en graphite (6) sont utilisées comme éléments d'étanchéité.

10. Robinetterie d'arrêt selon une ou plusieurs revendications 1 à 9,
caractérisée par le fait
que les éléments d'étanchéité (6; 7) peuvent être reliés à un dispositif d'extraction du bourrage par l'intermédiaire d'un trou taraudé (8).

11. Robinetterie d'arrêt selon une ou plusieurs revendications 1 à 10,
caractérisée par le fait
que les presse-étoupes (5) sont prétendues contre les éléments d'étanchéité (6; 7) à l'aide d'un ressort de pression agissant dans le sens de l'axe longitudinal.

12. Robinetterie d'arrêt selon une ou plusieurs revendications 1 à 11,
caractérisée par le fait
que les bagues d'étanchéité (4; 23; 24) sont des joints toriques.
